# EUROPÄISCHE PATENTSCHRIFT

(11) **EP 1 250 210 B1**
(45) Veröffentlichungstag und Bekanntmachung des Hinweises auf die Patenterteilung: **23.06.2004**
(21) Anmeldenummer: 01902149.2
(22) Anmeldetag: 26.01.2001
(51) Int. Cl.: B23K 20/12

(54) **VERFAHREN ZUM VERBINDEN ZWEIER TEILE MITTELS REIBSCHWEISSUNG UND NACH DIESEM VERFAHREN HERGESTELLTES MASCHINENELEMENT**
METHOD FOR CONNECTING TWO COMPONENTS BY MEANS OF FRICTION WELDING AND A MACHINE ELEMENT PRODUCED ACCORDING TO SAID METHOD
PROCEDE POUR ASSEMBLER DEUX PIECES PAR SOUDAGE PAR FRICTION, ET ELEMENT DE MACHINE REALISE SELON CE PROCEDE

(30) Priorität: 26.01.2000 AT 462000
(43) Veröffentlichungstag der Anmeldung: 23.10.2002
(73) Patentinhaber: Magna Steyr Powertrain AG & CO KG, 8041 Graz (AT)
(72) Erfinder: KLAMPFL, Heinz, Karl, A-8572 Bärnbach (AT)
(74) Vertreter: Kovac, Werner
(86) Internationale Anmeldenummer: PCT/AT2001/000021
(87) Internationale Veröffentlichungsnummer: WO 2001/054852

(56) Entgegenhaltungen:
- FR-A- 2 321 206
- US-A- 3 477 115
- US-A- 3 495 321

## Beschreibung

Die Erfindung betrifft ein Verfahren zum Verbinden eines ersten Teiles mit einem zweiten Teil, wobei das erste Teil eine erste Kontaktfläche und das zweite Teil eine zweite Kontaktfläche besitzt, die zylindrisch sind und einander in verbundenem Zustand berühren, mittels Reibschweissung mit kreissymmetrischen Verbindungsteilen in folgenden Schritten:
a) der zweite Teil wird mit einer durchgehenden zur zweiten Kontaktfläche normalen Bohrung versehen,
b) die beiden Teile werden mit ihren bearbeiteten Kontaktflächen (3,4) zum Anliegen gebracht und zueinander positioniert in einer Reibschweissmaschine festgespannt,
c) als Verbindungsteil wird ein eine Stirnfläche aufweisender Verbindungsstift in der anderen Spanneinrichtung einer Reibschweissmaschine festgespannt,
d) der Verbindungsstift wird in die Bohrung eingeführt, bis er die erste Kontaktfläche erreicht und dann unter Drehung eine Reibschweissverbindung zwischen der Stirnfläche des Verbindungsstiftes und dem ersten Teil hergestellt,
e) nach Beendigung der Schweissung verbleibt der Verbindungsstift zumindest teilweise in der Bohrung.

Die Kontaktflächen sind Zylinderflächen, zumindest eines der zu verbindenden Teile daher kreissymmetrisch, vorzugsweise eine Welle mit einem darauf befestigten Körper, etwa einem Zahnrad, einer Nabe oder mit einem exzentrischen Ausgleichskörper. Die Verbindung kann im übrigen sowohl mittels eines oder auch mittels mehrerer Verbindungsteile hergestellt sein.

Ein derartiges Verfahren ist aus der US 3,477,115 bekannt. Bei diesem werden zwei Platten mittels eines nietförmigen Stiftes verbunden. Nach der Schweissung sitzt der Kopf des Verbindungsstiftes auf dem zweiten Teil auf, sodass beide Teile fest aufeinandersitzen. Die so hergestellte Verbindung ähnelt einer Nietung, bei der die beiden Teile zusammengezogen werden, wobei auch ein gewisser Reibschluss zwischen diesen hergestellt wird. Für eine dauerhaft genaue Positionierung und die Übertragung von, insbesondere pulsierenden, Kräften quer zur Achse des Stiftes ist eine solche Verbindung nicht geeignet. Bei rotationssymmetrischen Teilen entstehen solche Querkräfte bei Übertragung eines Drehmomentes.

Dabei steht der Verbindungsstift auch unter Zugspannung und die verbundenen Teile unter Druckspannung, was zu einem Verzug der Teile führen kann. Das bedingt auch Einschränkungen bei der Wahl der Schweissparameter, wodurch das Verfahren vor allem im Blechbereich brauchbar; für dickere Teile, besondere Anforderungen und schwer verschweissbare Werkstoffe aber nicht geeignet ist.

Nach diesem Verfahren hergestellte Maschinenelemente sind somit nicht dauerhaft genau gefügt, bisweilen verzogen, was sich bei rotierenden Maschinenelementen verbietet und für die Übertragung eines Drehmomentes überhaupt nicht geeignet. Deshalb handelt die Erfindung auch von erfindungsgemäß hergestellten Maschinenelementen.

Aus der US 3,495,321 ist ein Verfahren zum Verbinden zweier dünner ebener Teile mittels eines Stiftes durch Reibschweissen bekannt, wobei der Stift in eine Öffnung im oberen der beiden Teile hindurchgesteckt und sodann die Reibschweissverbindung zwischen dem Stift und beiden Teilen hergestellt wird. Dazu ist der Durchmesser des Stiftes und der Öffnung so gewählt, dass zwischen dem Stift und dem Teil mit der Öffnung ein Reibschluss entsteht, der dessen Erwärmung über seine Länge bewirkt. Eine Anwendung dieses Verfahrens auf die maßgenaue und verzugsfreie Verbindung für den rotierenden Betrieb geeigneter Maschinenelemente ist nicht denkbar.

Es ist Ziel der Erfindung, ein gattungsgemäßes Verfahren zu schaffen, das die genannten Nachteile nicht hat. Es soll schnell und billig und auch für dicke Werkstücke bzw. rotierende Maschinenelemente aus verschiedenen Werkstoffen geeignet sein, in der Folge genaue Werkstücke liefern, die auch Schubkräfte bzw. ein Drehmoment übertragen können. Zur Minimierung des Verzuges soll auch möglichst wenig Energie zuzuführen sein.

Zur Herstellung der Reibschweissverbindung im engeren Sinne wird der Verbindungsstift in die Bohrung eingeführt, bis er die erste Kontaktfläche erreicht und dann unter Drehung angepresst wird, wodurch zwischen der Stirnfläche des Verbindungsstiftes und dem ersten Teil die Reibschweissverbindung hergestellt wird.

Das erfindungsgemäße Verfahren besteht darin, dass die Bohrung größer als der Verbindungsteil ist, sodass zwischen Bohrung und Verbindungsteil ein Raum entsteht, in dem der in Schritt d) entstehende Schweisswulst Platz findet und dort eine formschlüssige Verbindung zwischen der Wand der Bohrung und dem Verbindungsstift herstellt.

Die größere Bohrung braucht nicht genau bearbeitet zu sein, eine Feinbearbeitung nach dem Bohren ist nicht erforderlich. Wenn das zweite Teil ein Gussteil ist, könnte sie sogar gussroh bleiben. Ihr Übermaß bezüglich des Verbindungsteiles erlaubt die genaue Positionierung der beiden Teile zueinander, ohne eine allzu genaue Positionierung der anderen Spanneinrichtung (die eine oder die andere ist drehbar und/oder verschiebbar) zu erfordern. Eine prozessspezifische Vorbereitung der ersten Kontaktfläche des ersten Teiles für die Schweissung ist normalerweise nicht erforderlich. Das Verfahren ist auch in dieser Hinsicht voll automatisierbar.

Das Übermass hat weiters die wichtige Konsequenz, dass der Raum zwischen dem Verbindungsstift und der Wand der Bohrung den für das Reibschweissen typischen Schweisswulst aufnimmt. Der Schweisswulst überbrückt so gewissermaßen das Spiel zwischen den beiden Teilen, fixiert die Positionierung und bildet eine formschlüssige Verbindung zwischen dem Verbindungsstift und dem zweiten Teil, die auch erhebliche Schubkräfte beziehungsweise Drehmomente aufnehmen kann. Durch diesen "Expansionsraum" bauen sich trotz der formschlüssigen Verbindung in den Teilen nur sehr geringe Spannungen auf. Mit der Freiheit, die Durchmessedifferenz in weiten Grenzen zu variieren hat man auch bei der Wahl der Schweissparameter viel mehr Freiheit, etwa zur Anpassung an verschiedene Werkstoffe. Dadurch sind auch schwer schweissbare Werkstoffe, ja sogar nichtmetallische Werkstoffe für das erfindungsgemäße Verfahren geeignet.

Dadurch, dass der Schweisswulst die Verbindungsfläche und damit die übertragbaren Schubkräfte vergrößert, braucht der Verbindungsteil nur ein Stift kleinen Durchmessers zu sein, was die benötigte Schweissenergie weiter vermindert und die Taktzeit weiter verkürzt. Es genügt in der Regel ein einfacher Stift ohne besonders gestaltete Stirnfläche. Er ist daher billig und auch einfach einzuspannen und zu zentrieren. Durch besondere Gestaltung der Stirnfläche kann die Wulstbildung und damit der ganze Schweissprozess maßgeblich beeinflusst werden.

In Weiterbildung der Erfindung wird der für die Verbindung der beiden Teile nicht mehr benötigte und in der anderen Spanneinrichtung der Reibschweissmaschine festgespannte Rest des Verbindungsstiftes von dem die Verbindung herstellenden Teil des Verbindungsstiftes getrennt, was ohne einen gesonderten Arbeitsgang durch Abreissen und/oder Abscheren des nicht benötigten Teiles in einer vorbestimmten Zone des Verbindungsstiftes und zu einem vorbestimmten Zeitpunkt erfolgen kann (Anspruch 2).

Besonders praktisch geht das, wenn der Verbindungsstift eine Sollbruchstelle aufweist (Anspruch 4), die vorzugsweise eine Umfangsnut ist (Anspruch 5). Die Trennung erfolgt dann ganz von selbst, wenn in der letzten Phase der Reibschweissung ein erhöhtes Drehmoment aufgebracht und/oder an der Einspannung eine Zugkraft aufgebracht wird. Die Sollbruchstelle kann so an eine sonst unzugängliche Stelle in der Bohrung gelegt werden, sodass der nicht benötigte Teil des Verbindungsstiftes nicht vorsteht.

Die Erfindung betrifft auch ein vorzugsweise rotierendes Maschinenelement, das aus einem ersten Teil mit einer ersten zylindrischen Kontaktfläche und aus einem zweiten Teil mit einer zweiten zylindrischen Kontaktfläche und einer in der zweiten Kontaktfläche endenden Bohrung, die einen Verbindungsstift aufnimmt, der die Bohrung durchdringt und dessen Stirnfläche mit der ersten Kontaktfläche durch eine Reibschweisszone verbunden ist. Dabei ist erfindungsgemäß der Durchmesser der Bohrung zumindest über einen Teil ihrer Tiefe größer als der des Verbindungsstiftes, sodass zwischen Bohrung und Verbindungsteil ein Raum entsteht, in dem der sich bildende Schweißwulst eine formschlüssige Verbindung zwischen erstem und zweitem Teil herstellt (Anspruch 3). Das so hergestellte Maschinenelement zeichnet sich durch hohe Genauigkeit und niedere Herstellkosten aus.

Besondere Umstände oder Werkstoffkonstellationen können es erforderlich machen, dass die Bohrung des zweiten Teiles in der Nähe der zweiten Kontaktfläche eine Erweiterung aufweist (Anspruch 6). Auf diese Weise kann das Fließverhalten des Schweisswulstes, die Wärmeableitung, die Prozesssicherheit und können auch die Eigenschaften der Schweissverbindung beeinflusst werden. Die Abtragung kann mechanisch, chemisch oder elektrisch erfolgen. Die Bohrung des zweiten Teiles kann aber auch auf der der zweiten Kontaktfläche abgewandten Seite eine Einschnürung aufweisen (Anspruch 7). Diese Einschnürung kann dann der Zentrierung des Verbindungsstiftes dienen.

Im folgenden wird die Erfindung anhand von Abbildungen beschrieben und erläutert. Es stellen dar:
- Fig. 1:: die Teile des erfindungsgemäßen Maschinenelementes vor dem Verschweissen,
- Fig. 2:: einen Teil eines nach dem erfindungsgemäßen Verfahren hergestellten erfindungsgemäßen Maschinenelementes in einer ersten Form,
- Fig. 3:: einen Teil eines nach dem erfindungsgemäßen Verfahren hergestellten erfindungsgemäßen Maschinenelementes in einer zweiten Form,
- Fig. 4:: Detail II der Fig. 1 in verschiedenen Varianten (a bis d), vor dem Verschweissen,
- Fig. 5:: Detail III der Fig. 1 in verschiedenen Varianten (a bis f), vor dem Verschweissen,
- Fig. 6:: Detail IV der Fig. 1 in verschiedenen Varianten (a bis e), vor dem Verschweissen,
- Fig. 7:: eine nach dem erfindungsgemäßen Verfahren zusammengebaute Ausgleichswelle einer Kolbenmaschine im Längsschnitt,
- Fig. 8:: Querschnitt zu Fig. 7,

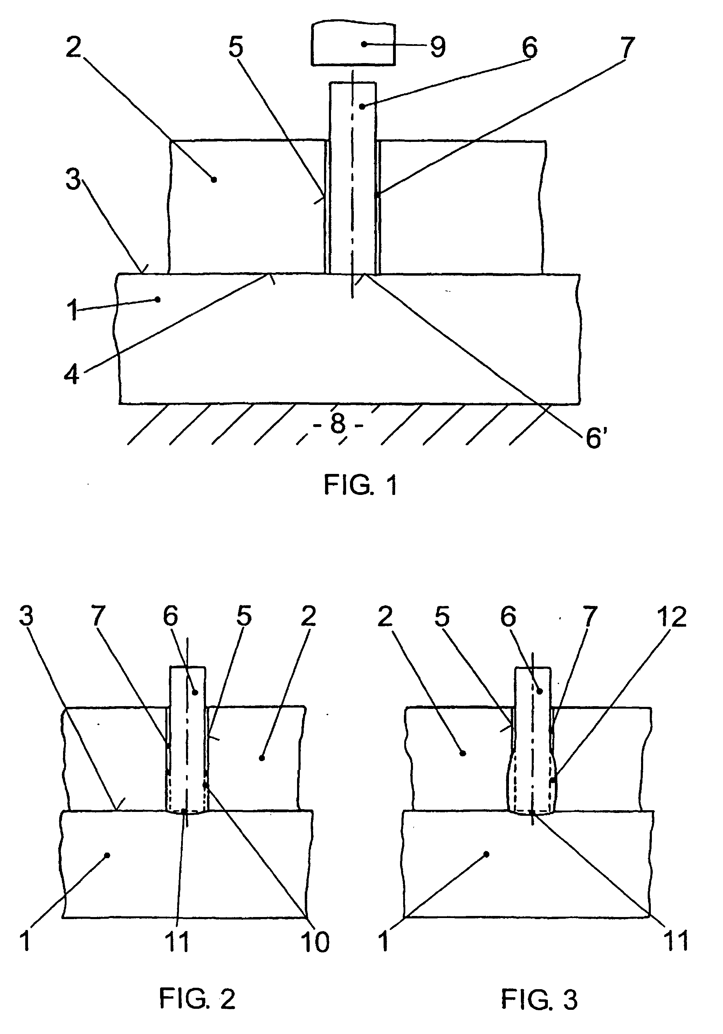

Fig. 1 zeigt teilweise ein Maschinenelement, das aus einem ersten Teil 1 und einem zweiten Teil 2 besteht, vor dem Verschweißen. Die Teile 1, 2 sind vorzugsweise eine Welle und eine Nabe. Die erste Kontaktfläche 3 des ersten Teiles und die zweite Kontaktfläche 4 des zweiten Teiles sind zylindrisch. Diese Flächen sind genau bearbeitet, sodaß Teil 1 und 2 sauber gefügt werden können. Im Falle zylindrischer Kontaktflächen bedeutet das zumindest einen Spielsitz. Das zweite Teil 2 besitzt eine Bohrung 5, die den Eintritt eines Verbindungsstiftes 6 gestattet, dessen Stirnfläche 6' in der gezeigten Stellung bereits auf der zweiten Kontaktfläche 4 aufsitzt. Der Durchmesser des Verbindungsstiftes 6 ist kleiner als der Innendurchmesser der Bohrung 5, sodaß zwischen diesen ein Zwischenraum 7 freibleibt.

Die Reibschweißung wird durch Relativbewegung zwischen dem Verbindungsstift 6 und den beiden gefügten Teilen 1, 2 vorgenommen. Dazu sind letztere an einer nur angedeuteten Spannvorrichtung 8 einer nicht dargestellten Reibschweißmaschine befestigt, der Verbindungsstift 6 an einer anderen Spannvorrichtung 9 der Reibschweißmaschine. Die zum Schweißen ausgeführte Relativbewegung ist eine Drehung um die Achse des Verbindungsstiftes 6 und ein Vorschub in Richtung dieser Achse. Diese Bewegungen laufen in einer festgesetzten Reihenfolge und in genau dosiertem Ausmaß ab, wobei diese mechanischen Schweißparameter in der bei Reibschweißungen üblichen Weise berechnet beziehungsweise ermittelt werden.

Die Bohrung 5 bedarf keiner Feinbearbeitung, sie kann auch gußroh sein. Das Verhältnis zwischen Bohrungsdurchmesser und Durchmesser des Verbindungsstiftes sowie gegebenenfalls die Form der Bohrung sind wichtige Einflußfaktoren zur Steuerung des Schweißprozesses. Von ihnen hängt das Fließverhalten und die endgültige Form des Schweißwulstes ab. Von ihnen hängt es aber auch ab, ob es zur weiteren Schweissung zwischen dem aufsteigenden Wulst und der Bohrung 5 kommt, oder lediglich zur Bildung einer formschlüssigen Verbindung.

Fig. 2 zeigt dasselbe Maschinenelement nach der Verschweißung. Bei dieser bildet die Stirnfläche 6' des Verbindungsstiftes 6 mit der ersten Kontaktfläche eine erste Schweißzone 11. Der dabei entstehende Schweißwulst 10 wird in den Zwischenraum 7 abgedrängt und bildet so mit der Bohrung 5 des zweiten Teiles 2 eine für die Übertragung einer Schubkraft beziehungsweise eines Drehmomentes geeignete formschlüssige Verbindung. Bis zu welcher Höhe und in welcher Weise der Schweißwulst 10 den Zwischenraum 7 füllt, hängt vom Durchmesserverhältnis und von den Schweißparametern ab. Auf diese Weise ist der Verbindungsstift 6 mit dem ersten Teil 1 verschweißt und der zweite Teil ist vom Verbindungsstift 6 in der Art eines Paßstiftes gegen Verschieben der Kontaktflächen 3, 4 zueinander gesichert. Bei der Werkstoffauswahl kommt es hier auf die Verschweißbarkeit des Verbindungsstiftes 6 mit dem ersten Teil 1 an, der zweite Teil 2 ist ja nur formschlüssig verbunden, er kann somit aus einem beliebigen Werkstoff, der nicht einmal ein Metall zu sein braucht, bestehen.

Mit anders gewählten Schweissparametem entsteht eine Verbindung gemäß Fig. 3. Bei dieser sind die Schweißparameter und die Werkstoffe so gewählt, dass zusätzlich zur ersten Schweißzone 11 auch der Schweißwulst 10 mit der Innenwand der Bohrung 5 im zweiten Teil 2 reibverschweißt wird und so eine zweite Schweißzone 12 bildet, und somit auch eine Schweißverbindung zwischen dem Verbindungsstift 6 und dem zweiten Teil 2. Die Höhe der zweiten Schweißzone 12 ist von der Breite des Zwischenraumes 7 und von den Schweißparametern abhängig.

Bei beiden Verfahrensführungen läuft der Schweißvorgang folgendermaßen ab: Die beiden Teile 1,2 werden mit ihren vorbereiteten Kontaktflächen 3,4 gefügt. Das zweite Teil 2 besitzt bereits eine Bohrung 5. Dann werden die beiden Teile 1,2 genau positioniert und in einer Spannvorrichtung der Reibschweißmaschine eingespannt. Dann wird der Verbindungsstift 6 in der anderen Spannvorrichtung der Reibschweißmaschine eingespannt und in die Bohrung 5 eingeführt und positioniert. Sodann wird der Verbindungsstift 6 durch eine Zustellbewegung in seiner Achse in die Bohrung 5 eingeführt, bis seine Stirnfläche 6' die zweite Kontaktfläche 4 berührt.

Nun beginnt der eigentliche Schweißvorgang, der aus einer Reibphase, einer Stauchphase und einer Halte- bzw Nachpressphase besteht. Der zeitliche Verlauf der Zustell- und der Rotationsbewegungen, die mechanischen Schweißparameter, wurden in für den Fachmann geläufiger Weise ermittelt. Der für das Reibschweißen typische Schweißwulst 10 steigt in den Zwischenraum 7 zwischen Verbindungsstift 6 und Bohrung 5 auf und bildet dort entweder eine formschlüssige Verbindung, wie in Fig.2, oder er verschweißt auch mit dem zweiten Teil 2 und bildet eine Verbindung wie in Fig.3.

In normalen Fällen braucht die erste Kontaktfläche 3 nicht prozessspezifisch bearbeitet zu sein, ist die Bohrung 5 zylindrisch und ist der Verbindungsstift 6 ebenfalls ein Zylinder. In besonderen Fällen oder zur Optimierung der Verbindung unter gewissen Umständen, können diese jedoch abweichend gestaltet sein.

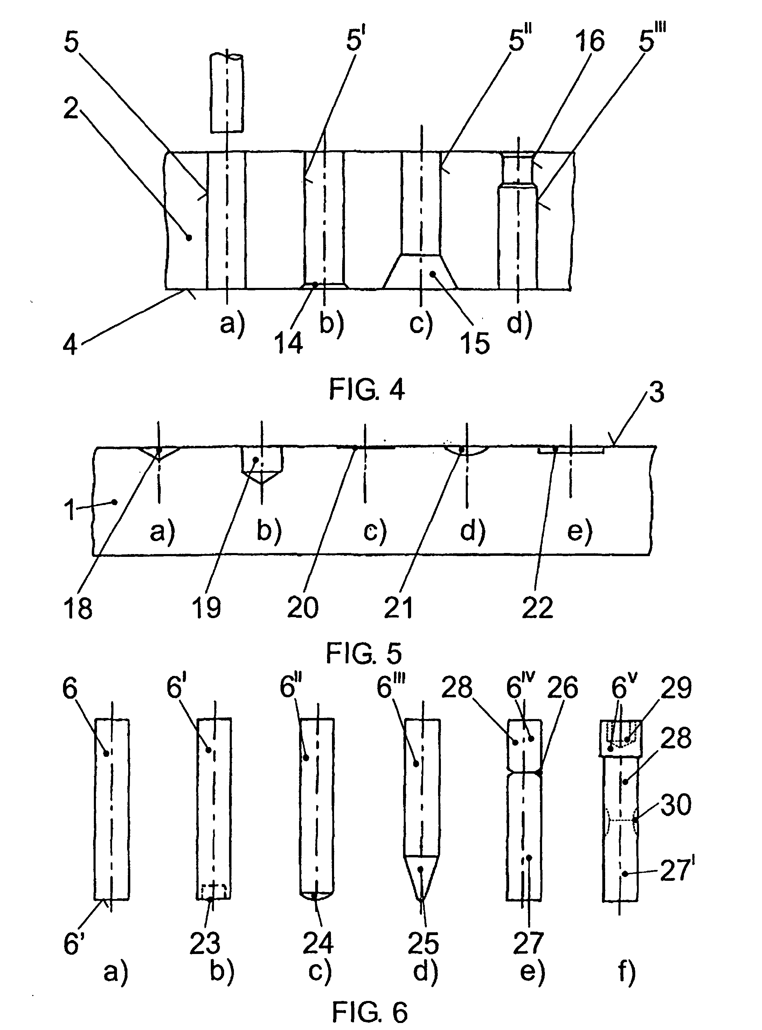

Gemäß Fig. 4 kann die Form der Bohrung 5 abgewandelt sein, weil deren Einfluss auf das Fließverhalten des Reibwulstes, das spezielle Füllverhalten im Übergangsbereich zwischen den beiden Teilen 1,2 und auf die Prozessstabilität erheblich ist. In Fig.4 zeigt a) eine normale zylindrische Bohrung 5; b) eine zylindrische Bohrung 5' mit einer kleinen Anphasung 14 im Übergangsbereich zwischen den Teilen 1, 2; c) eine große Ansenkung 15 und d) eine Einschnürung 16 im oberen Bereich, die etwa der Zentrierung des Verbindungsstiftes 6 in dem zweiten zu verbindenden Teil 2 dient.

Fig. 5 zeigt verschiedene Ausbildungen der ersten Kontaktfläche 3 an der Stelle, an der die Verschweißung mit dem Verbindungsstift 6 stattfinden soll. Normalerweise ist keine vorbereitende Bearbeitung erforderlich, eine solche kann aber bei besonderen Werkstoffpaarungen und/oder Oberflächenbeschaffenheit des ersten Teiles 1 vorteilhaft sein. Gemäß a) ist eine Einsenkung 18 vorgesehen; gemäß b) eine Sackbohrung 19. Zum örtlichen Abtragen kohlenstoffreicher Einsatzschichten oder Nitritschichten genügt eine in c) nur angedeutete örtliche Abtragung 20. Sie kann durch chemische Oberflächenumwandlung, Laserbearbeitung oder leichtes Anschleifen erfolgen. Gemäß d) ist eine kalottenförmige Mulde 21 vorgesehen oder gemäß e) eine ebene Einsenkung 22.

Fig. 6 zeigt verschiedene mögliche Ausbildungen des Verbindungsstiftes 6. Im Normalfall wird ein Zylinderstift 6 mit ebener Stirnfläche 6' gemäß a) verwendet. Alternativ kann der Verbindungsstift 6 an seiner Stirnfläche 6' gemäß b) eine kreissymmetrische Vertiefung 23 besitzen, welche einen besonders fülligen Schweißwulst ergibt; oder sie besitzt gemäß c) an ihrer Stirnfläche eine Kalotte 24; oder gemäß d) eine abgerundete Spitze 25. Um bei Beendigung der Reibschweißung selbsttätig eine Trennung des Verbindungsstiftes 6 herbeizuführen, ist entweder gemäß e) eine scharfkantige Umfangsnut 26 vorgesehen oder die Schweißparameter und Maße sind so gewählt, dass sich gemäß f) eine Zone 30 erhöhter Temperatur bildet.

Die Umfangsnut 26 bewirkt, dass sich bei Erreichen eines bestimmten Drehmomentes der überflüssige Teil 28 des Verbindungsstift□s 6 von dem in der Bohrung 5 verbleibenden Teil 27 trennt. Dieser Momentenanstieg kann mittels der Reibschweissmaschine selbst oder durch eine geeignete Zusatzeinrichtung aufgebracht werden; er kann bereits ohne besonderes Zutun in der Stauchphase oder in der Nachpressphase auftreten. Eine ausreichend hohe Temperatur in der Zone 30 ist durch geeignete Auslegung zu erreichen. In f) ist noch ein Kopf 29 für die Einspannung in der Spannvorrichtung der Reibschweißmaschine angedeutet.

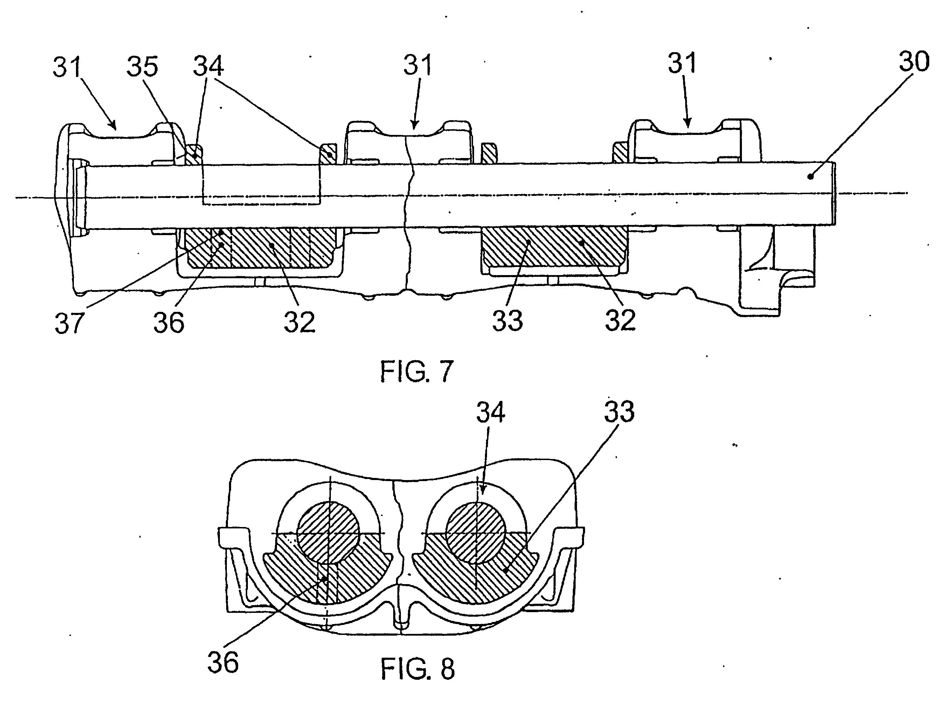

Fig. 7 und 8 zeigen eine unter Anwendung des erfindungsgemäßen Verfahrens hergestellte Ausgleichswelle einer Kolbenmaschine. Die Ausgleichswelle 30 ist im günstigsten Fall, wie hier, eine glatte zylindrische Welle mit durchgehend gleichem Durchmesser, also besonders einfach und billig zu fertigen. Sie entspricht dem ersten Teil 1 der Fig.1, ihre Oberfläche bildet die erste Kontaktfläche. Die Ausgleichswelle 30 ist in Lagern 31 in einem nur angedeuteten Lagerstuhl gelagert. Auf ihr sind, jeweils zwischen zwei Lagern 31, Ausgleichsgewichte 32 in der erfindungsgemäßen Weise befestigt. Das Ausgleichsgewicht 32 ist hier ein einteiliges Gußstück, das genau auf die Ausgleichswelle 30 paßt, kann aber auch eine Schmiede- oder Drehteil sein. Es besteht aus einer exzentrischen Ausgleichsmasse 33 und zwei die Ausgleichswelle 30 umfassenden Ringteilen 34. Das Ausgleichsgewicht entspricht dem zweiten Teil der Fig. 1. Das Ausgleichsgewicht 32 besitzt weiters eine Spurlagerfläche 35, die mit dem Lager 31 zusammenwirkt. Deshalb und wegen der Funktionserfordernisse einer Ausgleichswelle muss das Ausgleichsgewicht 32 sowohl in Längs- als auch in Umfangsrichtung genau positioniert auf der Ausgleichswelle 30 fixiert werden.

Zur Befestigung besitzt das Ausgleichsgewicht 32 im dargestellten Ausführungsbeispiel zwei Bohrungen 36, entsprechend Bohrungen 5 der Fig.1. Eine Bohrung 36 würde aber genügen.

Dank der besonderen Vorteile des erfindungsgemäßen Verfahrens und der Eigenschaften des erfindungsgemäßen Maschinenelementes ist es möglich, die Ausgleichswelleneinheit gemäß Fig. 7 zu montieren, die montierte Einheit einzuspannen, die Ausgleichsgewichte genau zu positionieren und dann erst die Reibungsschweißung vorzunehmen. Die dadurch erzielte Zeit- und Kostenersparnis ist bei höchster Qualität, Zuverlässigkeit und Reproduzierbarkeit der Verbindung außerordentlich hoch.

## Patentansprüche

1. Verfahren zum Verbinden eines ersten Teiles mit einem zweiten Teil, wobei das erste Teil (1) eine erste Kontaktfläche (3) und das zweite Teil (2) eine zweite Kontaktfläche (4) besitzt, die zylindrisch sind und einander in verbundenem Zustand berühren, mittels Reibschweissung mit kreissymmetrischen Verbindungsteilen, bestehend in folgenden Schritten:
a) der zweite Teil (2) wird mit einer durchgehenden zur zweiten Kontaktfläche (4) normalen Bohrung (5) versehen,
b) die beiden Teile (1,2) werden mit ihren bearbeiteten Kontaktflächen (3,4) zum Anliegen gebracht und zueinander positioniert in einer Reibschweissmaschine (8) festgespannt,
c) als Verbindungsteil wird ein eine Stirnfläche (6') aufweisender Verbindungsstift (6) in der anderen Spanneinrichtung (9) einer Reibschweissmaschine festgespannt,
d) der Verbindungsstift (6) wird in die Bohrung (5) eingeführt, bis er die erste Kontaktfläche (3) erreicht und dann unter Drehung in Richtung der Drehachse angepresst, wodurch eine Reibschweissverbindung (11; 39) zwischen der Stirnfläche des Verbindungsstiftes (6) und dem ersten Teil (1) hergestellt wird,
e) . nach Beendigung der Schweissung verbleibt der Verbindungsstift (6; 27; 37) zumindest teilweise in der Bohrung (5; 36),
**dadurch gekennzeichnet, dass** die Bohrung (5) größer als der Verbindungsteil (6) ist, sodass zwischen Bohrung (5) und Verbindungsteil (6) ein Raum (7) entsteht, in dem der in Schritt d) entstehende Schweisswulst (10) Platz findet und dort eine formschlüssige Verbindung zwischen der Wand der Bohrung (5) und dem Verbindungsstift (6) herstellt.

2. Verfahren nach Anspruch 1, wobei der nach Schritt d) nicht mehr benötigte Rest (28) des Verbindungsstiftes (6) von dem die Verbindung herstellenden Teil (27; 37) getrennt wird, **dadurch gekennzeichnet, dass** die Trennung durch Abreissen und/oder Abscheren des nicht benötigten Teiles in einer vorbestimmten Zone (30) des Verbindungsstiftes (6) erfolgt.

3. Maschinenelement, bestehend aus einem ersten Teil (1; 30) mit einer ersten zylindrischen Kontaktfläche (3) und aus einem zweiten Teil (2), mit einer zweiten zylindrischen Kontaktfläche (4) und einer an der zweiten Kontaktfläche endenden Bohrung (5; 36), die einen Verbindungsstift (6; 37) aufnimmt, die Bohrung (5; 36) durchdringt und dessen Stirnfläche (6') mit der ersten Kontaktfläche (3) durch eine erste Reibschweisszone (11; 39) verbunden ist, **dadurch gekennzeichnet, dass** der Durchmesser der Bohrung (5; 36) zumindest über einen Teil ihrer Tiefe größer als der des Verbindungsstiftes (6; 37) ist, sodass zwischen Bohrung (5) und Verbindungsteil (6) ein Raum (7) entsteht, in dem der sich bildende Schweisswulst (10) eine formschlüssige Verbindung zwischen erstem und zweitem Teil (1,2; 30,32) herstellt.

4. Maschinenelement nach Anspruch 3, **dadurch gekennzeichnet, dass** der Verbindungsstift (6) eine Sollbruchstelle (26; 30) aufweist.

5. Maschinenelement nach Anspruch 4, **dadurch gekennzeichnet, dass** die Sollbruchstelle (26) eine Umfangsnut ist.

6. Maschinenelement nach Anspruch 3, **dadurch gekennzeichnet, dass** die Bohrung (5) des zweiten Teiles in der Nähe der zweiten Kontaktfläche eine Erweiterung (14; 15) aufweist.

7. Maschinenelement nach Anspruch 3, **dadurch gekennzeichnet, dass** die Bohrung (5) des zweiten Teiles auf der der zweiten Kontaktfläche abgewandten Seite eine Einschnürung (16) aufweist.

## Claims

1. A method of joining a first part to a second part, the first part (1) having a first contact face (3) and the second part (2) having a second contact face (4), which are cylindrical and touch each other when joined, by means of frictional welding with circularly symmetrical joining parts, consisting in the following steps:
a) the the second part (2) is provided with a through bore (5) which is normal to the second contact face (4),
b) the two parts (1, 2) are brought into contact with their machined contact faces (3, 4) and, positioned in relation to each other, are firmly clamped in a friction welding machine (8),
c) as a joining part, a joining pin (6) having an end face (6') is firmly clamped in the other clamping device (9) of a friction welding machine,
d) the joining pin (6) is inserted into the bore (5) until it reaches the first contact face (3) and then, under rotation, is pressed on in the direction of the axis of rotation, whereby a friction welded joint (11; 39) is produced between the end face of the joining pin (6) and the first part (1),
e) after the welding has been completed, the joining pin (6; 27; 37) remains at least partly in the bore (5; 36),
**characterized in that** the bore (5) is wider than the joining pin (6), to the effect that a space (7) is created between the bore (5) and the joining pin (6), which space(7) receives the welding bead (10) produced in step d), which welding bead (10) forms a form-fitting joint between the wall of bore (5) and the joining pin (6).

2. The method as claimed in claim 1, wherein that the part (28) of the joining pin (6) which, following step d), is no longer needed is separated from the part (27; 37) producing the joint, **characterized in that** the separation is carried out by tearing off and/or shearing off the unneeded part in a predetermined zone (30) of the joining pin (6).

3. A machine element comprising a first part (1; 30) with a first cylindrical contact face (3) and a second part (2) with a second cylindrical contact face (4) and a bore (5; 36) which ends at the second contact face (4) and accommodates a joining pin (6; 37), which passes through the bore (5; 36) and its end face (6') being joined to the first contact face (3) by a first friction welded zone (11; 39), **characterized in that** the diameter of the bore (5;36) is greater than that of the joining pin (6; 37) at least over part of its depth, to the effect that a space (7) is created between bore (5;36) and joining pin (6; 37), in which space (7) the rising welding bead (10) provides a form-fitting joint between the first and second parts (1, 2; 30, 32).

4. The machine element as claimed in claim 3, **characterized in that** the joining pin (6) has an intended fracture point (26; 30).

5. The machine element as claimed in claim 4, **characterized in that** the intended fracture point (26) is a circumferential groove.

6. The machine element as claimed in claim 3, **characterized in that** the bore (5) of the second part has a widening (14; 15) in the vicinity of the second contact face.

7. The machine element as claimed in claim 3, **characterized in that** the bore (5) of the second part has a constriction (16) on the side facing away from the second contact face.

## Revendications

1. Procédé de liaison d'une première pièce à une deuxième pièce, la première pièce (1) présentant une première surface de contact (3) et la deuxième pièce (2) présentant une deuxième surface de contact (4) qui sont cylindriques et qui reposent l'une sur l'autre à l'état lié, par soudage par friction avec des pièces de liaison à symétrie circulaire, lequel procédé comporte les étapes suivantes :
a) la deuxième pièce (2) est dotée d'un alésage traversant (5) de direction perpendiculaire à la deuxième surface de contact (4),
b) les deux pièces (1, 2) sont amenées l'une contre l'autre au niveau de leurs surfaces de contact usinées (3, 4) et sont fixées dans une machine de soudage par friction (8) en étant positionnées l'une par rapport à l'autre,
c) une tige de liaison (6') présentant une surface frontale (6) est fixée en tant que pièce de liaison dans l'autre dispositif de fixation (9) d'une machine de soudage par friction,
d) la tige de liaison (6) est insérée dans l'alésage (5) jusqu'à atteindre la première surface de contact (3), puis est pressée en tournant dans la direction de l'axe de rotation de façon à réaliser une liaison (11 ; 39) par soudage par friction entre la surface frontale de la tige de liaison (6) et la première pièce (1) ,
e) après le soudage, la tige de liaison (6 ; 27 ; 37) reste au moins partiellement dans l'alésage (5 ; 36) ,
**caractérisé en ce que** l'alésage (5) est plus grand que la pièce de liaison (6), de façon à ménager entre l'alésage (5) et la pièce de liaison (6) un espace dans lequel vient se placer le cordon de soudure (10) réalisé à l'étape d) et dans lequel il est réalisé une liaison par verrouillage de forme entre la paroi de l'alésage (5) et la tige de liaison (6).

2. Procédé selon la revendication 1, dans lequel la partie résiduelle (28) de la tige de liaison (6), qui n'est plus utile après l'étape d), est séparée de la pièce (27 ; 37) réalisant la liaison, **caractérisé en ce que** la séparation est effectuée par arrachage et/ou cisaillement de la partie inutile dans une zone prédéterminée (30) de la tige de liaison (6).

3. Élément de machine se composant d'une première pièce (1 ; 30) présentant une première surface de contact cylindrique (3), et d'une deuxième pièce (2) présentant une deuxième surface de contact cylindrique (4) et comportant un alésage (5 ; 36) se terminant au niveau de la deuxième surface de contact, lequel alésage reçoit une tige de liaison (6 ; 37) qui traverse l'alésage (5 ; 36) et dont la surface frontale (6') est liée à la première surface de contact (3) par une première zone de soudure (11 ; 39), **caractérisé en ce que** le diamètre de l'alésage (5 ; 36) est supérieur, au moins sur une partie de sa profondeur, à celui de la tige de liaison (6 ; 37), de façon à générer entre l'alésage (5) et la partie de liaison (6) un espace dans lequel le cordon de soudure en formation (10) réalise une liaison par verrouillage de forme entre la première pièce et la deuxième pièce (1, 2 ; 30, 32).

4. Élément de machine selon la revendication 3, **caractérisé en ce que** la tige de liaison (6) comporte un emplacement de rupture (26 ; 30).

5. Élément de machine selon la revendication 4, **caractérisé en ce que** l'emplacement de rupture (26) est une gorge périphérique.

6. Élément de machine selon la revendication 3, **caractérisé en ce que** l'alésage (5) de la deuxième pièce comporte, à proximité de la deuxième surface de contact, un élargissement (14 ; 15).

7. Élément de machine selon la revendication 3, **caractérisé en ce que** l'alésage (5) de la deuxième pièce comporte, sur le côté qui est opposé à la deuxième surface de contact, un rétrécissement (16).
